# EUROPÄISCHE PATENTSCHRIFT

(11) **EP 0 778 167 B1**
(45) Veröffentlichungstag und Bekanntmachung des Hinweises auf die Patenterteilung: **29.12.1999**
(21) Anmeldenummer: 96117122.0
(22) Anmeldetag: 25.10.1996
(51) Int. Cl.: B60H 1/00

(54) **Heizungs- oder Klimaanlage für Fahrzeuginnenräume**
Heating or air conditioning device for the interior of vehicles
Appareil de chauffage ou de climatisation pour l'habitacle de véhicules

(30) Priorität: 06.12.1995 DE 19545483
(43) Veröffentlichungstag der Anmeldung: 11.06.1997
(73) Patentinhaber: DaimlerChrysler AG, 70567 Stuttgart (DE)
(72) Erfinder: Arold, Klaus, 71067 Sindelfingen (DE)

(56) Entgegenhaltungen:
- WO-A-90/11904
- DE-A- 2 655 554
- DE-A- 4 134 485
- FR-A- 2 484 337

## Beschreibung

Die Erfindung betrifft eine Heizungs- oder Klimaanlage für Fahrzeuginnenräume gemäß dem Oberbegriff des Patentanspruchs 1.

Bei einer bekannten Heizungs- oder Klimaanlage dieser Art (FR-A-2 484 337) sind die Absperrmittel als Zylinderabschnitte in der Kanalwand des Kaltluftkanals ausgebildet, die konzentrisch zur Schwenkachse der Kaltluftklappe verlaufen. Warm- und Kaltluftklappe sind miteinander derart zwangsgekoppelt, daß in einer ersten Schwenkphase die Warmluftklappe die Kanalmündung des Warmluftkanals teilweise freigibt, während die Kanalmündung des Kaltluftkanals durch Verbleiben der Kaltluftklappe innerhalb des Abdeckbereichs der Luftabsperrmittel noch geschlossen bleibt, daß in einer zweiten Schwenkphase bei weiterer Öffnung der Kanalmündung des Warmluftkanals die Kaltluftklappe aus dem Bereich der Luftabsperrmittel heraustritt und die Kanalmündung des Kaltluftkanals zunehmend freigibt und daß in einer dritten Phase die Kanalmündung des Warmluftkanals wieder von der Warmluftklappe verschlossen wird, während die Kaltluftklappe die Kanalmündung des Kaltluftkanals maximal freigibt. Hierdurch können unterschiedliche Belüftungszustände im Fahrzeuginnenraum, wie Aufheizen mit maximal warmer Luft, Heizen mit individuell einstellbarer temperierter Luft und Kühlen mit Kaltluft, realisiert werden.

Bei einer ebenfalls bekannten Heizungs- oder Klimaanlage dieser Art (DE-A1- 41 34 485) ist zur Erzielung einer gut einstellbaren Temperierung der die Mischkammer verlassenden Misch- oder Abluft bei ausreichender Vermischung der zusammengeführten Kalt- und Warmluftströme die Warmluftkanalmündung in einen Haupt- und einen Nebenauslaß unterteilt, wobei der Nebenauslaß mit einem kleineren Luftdurchtrittsquerschnitt derart gestaltet ist, daß die aus ihm austretenden Warmluft eine Richtungskomponente aufweist, die dem aus der Kaltluftkanalmündung austretende Luftstrom entgegengerichtet ist. Die Warmluftklappe ist als Segmentklappe ausgebildet, die bei Schwenken in Öffnungsrichtung zunächst den Nebenauslaß und dann zunehmend den Hauptauslaß freigibt. Eine solche konstruktive Gestaltung zur Mischung von Warm- und Kaltluft ist nicht nur fertigungstechnisch relativ aufwendig, sondern versagt auch bei solchen Heizungs- oder Klimaanlagen, bei welchen die Kaltluftkanalmündung aus Gründen einer schnellen Kaltluftdurchlüftung des Fahrzeuginnenraums mit hohem Luftdurchsatz sehr viel größer ausgeführt ist als die Warmluftkanalmündung.

Der Erfindung liegt die Aufgabe zugrunde, bei einer Heizungs- oder Klimaanlage der eingangs genannten Art, in welcher zur schnellen Durchlüftung des Fahrzeuginnenraums die Mischkammer mit einer sehr großen Kaltluftkanalmündung versehen ist, mit konstruktiv einfachen Maßnahmen im Normalbetrieb eine ausreichend fein dosierbare Temperierung und gute Vermischung der aus der Mischkammer austretenden Misch- oder Abluft sicherzustellen.

Die Aufgabe ist bei einer Heizungs- oder Klimaanlage der im Oberbegriff des Patentanspruchs 1 definierten Gattung erfindungsgemäß durch die Merkmale im Kennzeichenteil des Anspruchs 1 gelöst.

Die erfindungsgemäße Heizungs- oder Klimaanlage hat den Vorteil, daß durch die Luftabsperrmittel an der Kaltluftkanalmündung der Kaltluftklappe ein Regelbereich zugeordnet wird, in dem der vom Schwenkweg der Kaltluftklappe abhängige Öffnungsquerschnitt der Kaltluftkanalmündung stark reduziert ist und somit Kaltluft sehr fein dosierbar der Warmluft zugesetzt werden kann. Erst nach Verlassen des Regelbereichs wird schlagartig ein sehr viel größerer Mündungsquerschnitt zum Einströmen der Kaltluft freigegeben, der durch weiteres Schwenken der Kaltluftklappe kontinuierlich vergrößert werden kann, bis in der Endstellung der Kaltluftklappe der maximale Mündungsquerschnitt der Kaltluftkanalmündung freigegeben ist.

Vorteilhafte Ausführungsformen der erfindungsgemäßen Heizungs- oder Klimaanlage mit zweckmäßigen Weiterbildungen und Ausgestaltungen der Erfindung sind in den weiteren Patentansprüchen angegeben.

Gemäß einer vorteilhaften Ausführungsform der Erfindung ist der im Regelbereich freigegebene Teil der Mündungsbreite der Kaltluftkanalmündung der Mündungsbreite der Warmluftkanalmündung angepaßt. Für eine optimale Auslegung hat sich bei gängiger Ausbildung der Kanalmündungen in der Mischkammer eine durch die Kaltluftklappe im Regelbereich freigegebene Mündungsbreite der Kaltluftkanalmündung von einem Drittel der Gesamtmündungsbreite als vorteilhaft erwiesen.

Gemäß einer bevorzugten Ausführungsform der Erfindung sind die Luftabsperrmittel durch zwei an der Kanalmündung diametral angeordnete bogenförmige Abdeckflächen realisiert, die jeweils von zwei die Schließstellung der Kaltluftklappe festlegenden, diametralen Anschlägen aus konzentrisch zur Schwenkachse der Kaltluftklappe mit geringem radialem Spiel zu den zur Schwenkachse parallelen Längskanten der Kaltluftklappe verlaufen und einen Teil des Schwenkwegs der Kaltluftklappe überdecken. Die zur Schwenkachse der Kaltluftklappe parallele Erstreckungslänge der einen Abdeckfläche entspricht der Mündungsbreite der Kaltluftkanalmündung während die Erstreckungslänge der anderen Abdeckfläche dem gegenüber kleiner ist, vorzugsweise entsprechend der Mündungsbreite der Warmluftkanalmündung ca. zwei Drittel der Mündungsbreite der Kaltluftkanalmündung beträgt.

Die Erfindung ist anhand eines in der Zeichnung dargestellten Ausführungsbeispiels im folgenden näher beschrieben. Es zeigen:
- Fig. 1: ausschnittweise einen Längsschnitt einer Klimaanlage für einen Fahrzeuginnenraum:
- Fig. 2: ausschnittweise einen Schnitt gemäß der Linie II-II in Fig. 1.

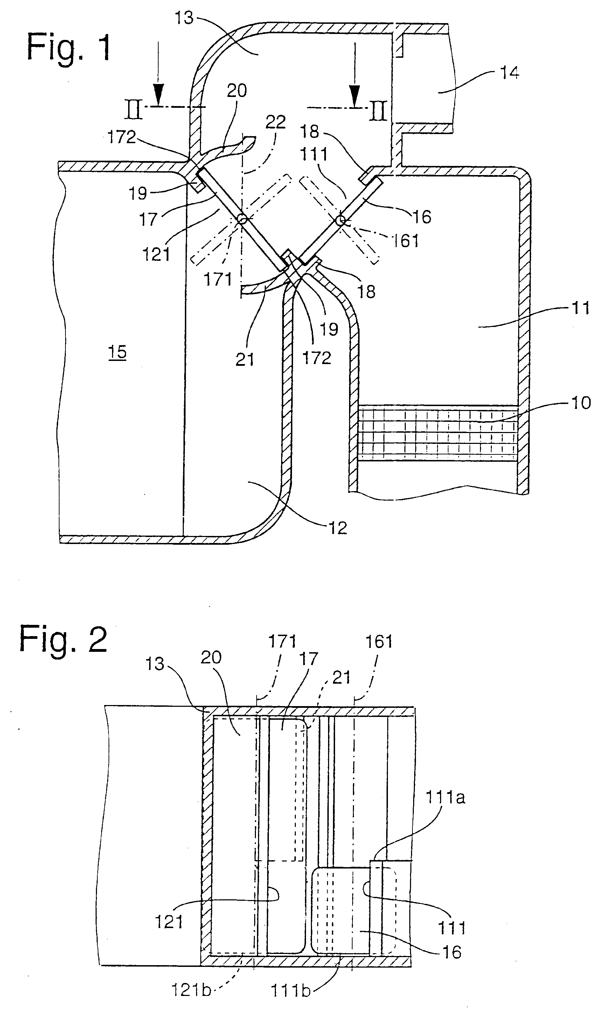

Die in Fig. 1 ausschnittweise schematisch skizzierte Klimaanlage für einen Fahrzeuginnenraum weist einen Warmluftkanal 11 und einen Kaltluftkanal 12 auf, die beide in einer Mischkammer 13 münden. Die Kanalmündungen sind mit 111 bzw. mit 121 bezeichnet. Von der Mischkammer 13 führt ein Abluftkanal 14 zu einer hier nicht dargestellten bekannten Mitteldüse, die im Armaturenbrett oder in der Instrumententafel des Fahrzeugs integriert ist. Im Warmluftkanal 11 durchströmt die von einem Gebläse gelieferte Luft einen Wärmetauscher 10, während die Luft im Kaltluftkanal 12 einen mit 15 angedeuteten Verdampfer der Klimaanlage durchströmt. An der Kanalmündung 111 des Warmluftkanals 11 ist eine Warmluftklappe 16 schwenkbar angeordnet, die aus einer in Fig. 1 ausgezogen dargestellten Schließstellung, in welcher sie die Kanalmündung 111 völlig sperrt, um ca. 90° in eine in Fig. 1 strichpunktiert dargestellte maximale Offenstellung überführt werden kann, in welcher sie den maximalen Mündungsquerschnitt für den Durchtritt von Warmluft freigibt, und umgekehrt. An der Kanalmündung 121 des Kaltluftkanals 12 ist eine Kaltluftklappe 17 schwenkbar gelagert, die in gleicher Weise aus einer in Fig. 1 ausgezogen dargestellten Schließstellung, in welcher sie die gesamte Kanalmündung 121 absperrt, um ca. 90° in eine maximale Offenstellung gedreht werden kann, in welcher der Querschnitt der Kanalmündung 121 zum Kaltluftdurchtritt maximal freigegeben ist, und umgekehrt. Die Schwenkachsen von Warmluftklappe 16 und Kaltluftklappe 17 sind in Fig. 1 und 2 mit 161 und 171 bezeichnet. In der Schließstellung liegen Warmluftklappe 16 und Kaltluftklappe 12 jeweils an Anschlägen 18 bzw. 19 an, die von den Kanalwänden vorspringen. Die Kanalmündungen 111 und 121 von Warmluftkanal 11 und Kaltluftkanal 12 liegen in Einbaulage der Klimaanlage, wie sie in Fig. 1 dargestellt ist, mit zueinander geneigten Kanalmündungsebenen im unteren Bereich der Mischkammer 13, während der Abluftkanal 14 im oberen Bereich der Mischkammer 13 abzweigt. Wie aus der Draufsicht von Kanalmündungen 111,121 und Luftklappen 16,17 in Fig. 2 hervorgeht, ist die Mündungsbreite der Kaltluftkanalmündung 121 (die in Fig. 1 senkrecht zur Zeichenebene verläuft) wesentlich größer als die Mündungsbreite der Warmluftkanalmündung 111, die etwa nur ein Drittel der Mündungsbreite der Kaltluftkanalmündung 121 beträgt. Damit hat die Kanalmündung 121 des Kaltluftkanals 12 einen wesentlich größeren Luftdurchtrittsquerschnitt als die Kanalmündung 111 des Warmluftkanals 11, was aus Gründen der schnellen Durchlüftung des Fahrzeuginnenraums mit Kaltluft vorgegeben wird. Die Kanalmündung 111 des Warmluftkanals 11 ist dabei seitlich versetzt zur Kanalmündung 121 des Kaltluftkanals 121 derart angeordnet, daß äußere Begrenzungsränder 121b und 111b der Kaltluftkanalmündung 121 und der Warmluftkanalmündung 111 in einer quer zu den Schwenkachsen 161,171 verlaufenden Ebene liegen und der innere Begrenzungsrand 111a der Warmluftkanalmündung 111etwa bei einem Drittel der Mündungsbreite der Kaltluftkanalmündung 121 liegt.

Um in einem vorgegebenen Regelbereich die aus der Mischkammer 13 austretende Misch- oder Abluft nach individuellen Wünschen der Fahrzeuginsassen temperieren zu können, sind an der Kaltluftkanalmündung 121 mit der Kaltluftklappe 17 zusammenwirkende Luftabsperrmittel in Form von bogenförmigen Abdeckflächen 20,21 derart ausgebildet, daß die Kaltluftklappe 17 die Kanalmündung 121 des Kaltluftkanals 12 über einen von ihrer Schließstellung ausgehenden, vorgegebenen Schwenkweg hinweg mit kontinuierlich anwachsendem Öffnungsquerschnitt nur über einen Teil der Mündungsbreite und jenseits dieses Schwenkwegs mit kontinuierlich anwachsendem Öffnungsquerschnitt in ihrer gesamten Mündungsbreite freigibt. Der freigegebene Teil der Mündungsbreite der Kaltluftkanalmündung 121 entspricht etwa der Mündungsbreite der Warmluftkanalmündung 111 und beträgt damit etwa ein Drittel der Mündungsbreite der Kaltluftkanalmündung 121. Um dieses zu realisieren, sind die beiden bogenförmigen Abdeckflächen 20,21 konzentrisch zur Schwenkachse 171 der Kaltluftklappe 17 mit derindem radialem Spiel zu den zur Schwenkachse 171 parallelen Längskanten 172 der Kaltluftklappe 17 angeordnet. Ausgehend von den beiden die Schließstellung der Kaltluftklappe 17 festlegenden Anschläge 19 überdecken sie dabei nur einen Teil des Schwenkwegs der Kaltluftklappe 17, der den Regelbereich für die Mischlufttemperierung definiert und etwa die Hälfte des maximalen Schenkwegs der Kaltluftklappe 17 beträgt. Wie aus Fig. 2 zu erkennen ist, ist die Erstreckungslänge der oberen Abdeckfläche 20 (in Fig. 1 senkrecht zur Zeichenebene gesehen), die also parallel zur Schwekachse 171 der Kaltluftklappe 17 verläuft, entsprechend der Mündungsbreite der Kaltluftkanalmündung 121 bemessen, während die Erstreckungslänge der unteren Abdeckfläche 21 demgegenüber entsprechend der Mündungsbreite der Warmluftkanalmündung 111 bemessen ist und nur zwei Drittel der Erstreckungslänge der oberen Abdeckfläche 20 beträgt. Die untere Abdeckfläche 21 endet dabei etwa am inneren, querverlaufenden Begrenzungsrand 111a der Kanalmündung 111 des Warmluftkanals 11. Die beiden Abdeckflächen 20,21 sind vorzugsweise einstückig an die Kanalwandung angeformt, wobei die obere Abdeckfläche 20 in die Mischkammer 13 und die untere Abdeckfläche 21 in den Kaltluftkanal 12 hineinragt.

Im Regelbereich kann die die Mischkammer 13 verlassende Mischluft durch entsprechende Einstellung der Warmluftklappe 16 und der Kaltluftklappe 17 individuell temperiert werden. Die Kaltluftkanalmündung 121 wird dabei nur in einer Mündungsbreite freigegeben, die etwa der Mündungsbreite der Warmluftkanalmündung 111 entspricht Die den Warmluftkanal 11 und den Kaltluftkanal 12 verlassenden Luftmengen liegen damit in etwa in gleicher Größenordnung, so daß sich die Mischtemperatur sehr genau dosieren läßt. Mit Verlassen des Regelbereichs durch die Kaltluftklappe 17 - das ist der Fall, wenn die Kaltluftklappe 17 in Fig. 1 über die strichpunktiert eingezeichnete Linie 22 hinausgeschwenkt wird - wird die Kaltluftkanalmündung 121 in ihrer vollen Mündungsbreite freigegeben, wobei der Luftdurchtrittsquerschnitt mit zunehmendem Schwenkweg der Kaltluftklappe 17 stärker anwächst. Damit wird der Kaltluftanteil drastisch vergrößert. Der Maximalwert ist eingestellt, wenn die Kaltluftklappe 17 ihre in Fig. 1 strichpunktiert eingezeichnete Endstellung erreicht hat, in welcher ihre Klappenflächen parallel zur Normalen der Kaltluftkanalmündung 121 liegen.

Die Erfindung ist nicht auf das vorstehend beschriebene Ausführungsbeispiel beschränkt. So kann die Warmluftkanalmündung 111 auch mittig zur Kaltluftkanalmündung 121 angeordnet werden. In diesem Fall ist die obere Abdeckfläche 20 zweigeteilt, wobei die beiden Teilflächen den Bereich der Warmluftkanalmündung 111 aussparen, also jeweils an einem Begrenzungsrand 111a bzw. 111b der Warmluftkanalmündung 111 enden. Bei einer Heizungsanlage entfällt der Verdampfer 15 im Kaltluftkanal 12, der dann über das Gebläse mit einem Frischlufteinlaß in Verbindung steht.

## Patentansprüche

1. Heizungs- oder Klimaanlage für Fahrzeuginnenräume mit einem Warmluft führenden Warmluftkanal (11) und einem Kaltluft führenden Kaltluftkanal (12) sowie mit einer an einem Abluftkanal (14) angeschlossenen Mischkammer (13), in der Warm- und Kaltluftkanal (11,12) mit getrennten Kanalmündungen (111,121) münden, mit einer den Mündungsquerschnitt des Warmluftkanals (11) steuernden, schwenkbaren Warmluftklappe (16), mit einer den Mündungsquerschnitt des Kaltluftkanals (12) steuernden, schwenkbaren Kaltluftklappe und mit an der Kanalmündung (121) des Kaltluftkanals (12) angeordneten, mit der Kaltluftklappe (17) zusammenwirkenden Luftabsperrmitteln (20,21),
**dadurch gekennzeichnet,**
daß die Luftabsperrmittel (20,21) derart ausgebildet sind, daß die Kaltluftklappe (17) die Kanalmündung (121) des Kaltluftkanals (12) über einen von ihrer Schließstellung ausgehenden, vorgegebenen Schwenkweg hinweg nur über einen Teil der Mündungsbreite und jenseits dieses Schwenkwegs in der gesamten Mündungsbreite jeweils mit kontinuierlich anwachsendem Öffnungsquerschnitt freigibt.

2. Anlage nach Anspruch 1,
**dadurch gekennzeichnet,**
daß der freigegebene Teil der Mündungsbreite der Kaltluft-Kanalmündung (121) etwa der Mündungsbreite der Kanalmündung (111) des Warmluftkanals (11) entspricht.

3. Anlage nach Anspruch 1 oder 2,
**dadurch gekennzeichnet,**
daß die Luftabsperrmittel zwei an der Kanalmündung (121) des Kaltluftkanals (12) diametral angeordnete, bogenförmige Abdeckflächen (20,21) aufweisen, die jeweils von zwei die Schließstellung der Kaltluftklappe (17) festlegenden diametralen Anschlägen (19) aus konzentrisch zur Schwenkachse (171) der Kaltluftklappe (17) mit geringem radialem Spiel zu den zur Schwenkachse (171) parallelen Längskanten (172) der Kaltluftklappe (17) verlaufen und einen Teil des Schwenkwegs der Kaltluftklappe (17) überdecken, und daß die zur Schwenkachse (171) der Kaltluftklappe (17) parallele Erstreckungslänge der einen Abdeckfläche (20) etwa der Mündungsbreite der Kaltluft-Kanalmündung (121) entspricht und die der anderen Abdeckfläche (21) demgegenüber um etwa die Mündungsbreite der Warmluftkanalmündung (111) kleiner ist.

4. Anlage nach Anspruch 3,
**dadurch gekennzeichnet,**
daß der von den bogenförmigen Abdeckflächen (20,21) überdeckte Teil des Schwenkwegs der Kaltluftklappe (17) etwa die Hälfte des maximalen Schwenkwegs der Kaltluftklappe (17) ist, der einerseits durch die Anschläge (19) und andererseits durch die Endstellung der Kaltluftklappe (17), in welche ihre Klappenflächen parallel zur Normalen der Kanalmündung (121) des Kaltluftkanals (12) ausgerichtet sind, festgelegt ist.

5. Anlage nach Anspruch 3 oder 4,
**dadurch gekennzeichnet,**
daß in Einbaulage die Kanalmündungen (111,121) von Warmluftkanal (11) und Kaltluftkanal (12) mit zueinander geneigten Kanalmündungsebenen im unteren Bereich der Mischkammer (13) liegen und daß die längere Abdeckfläche (20) am oberen Rand der Kanalmündung (121) und die kürzere Abdeckfläche (21) am unteren Rand der Kanalmündung (121) des Kaltluftkanals (12) ansetzt.

6. Anlage nach Anspruch 5,
**dadurch gekennzeichnet,**
daß die Kanalmündung (121) des Kaltluftkanals (12) sich über die gesamte Breite der Mischkammer (13) und die Kanalmündung (111) des Warmluftkanals (11) nur über ein Drittel der Mischkammerbreite erstreckt, wobei vorzugsweise die beiden äußeren Begrenzungsränder (111b,121b) der beiden Kanalmündungen (111,121) in einer Ebene liegen und daß die untere Abdeckfläche (21) am inneren Begrenzungsrand (111a) der Kanalmündung (111) des Warmluftkanals (11) endet.

7. Anlage nach Anspruch 5 oder 6,
**dadurch gekennzeichnet,**
daß die obere Abdeckfläche (20) in die Mischkammer (13) und die untere Abdeckfläche (21) in den Kaltluftkanal (12) hineinragt.

8. Anlage nach einem der Ansprüche 1 - 7,
**dadurch gekennzeichnet,**
daß die Abdeckflächen (20,21) einstückig an die Wandungen von Mischkammer (13) bzw. Kaltluftkanal (12) angeformt sind.

## Claims

1. Heating or air-conditioning unit for the insides of vehicles, with a warm air duct (11) conveying warm air and a cold air duct (12) conveying cold air and with a mixing chamber(13) connected to an air outlet duct (14), into which the warm and cold air ducts (11, 12) open with separate duct apertures (111, 112), with a swivelling warm air flap-valve (16) which controls the aperture cross-section of the warm air duct (11), with a swivelling cold air flap-valve (17) which controls the aperture cross-section of the cold air duct (12), and with air blocking means (20, 21) arranged at the duct aperture (121) of the cold air duct (12, the said means cooperating with the cold air valve (17),
**characterised in that**
the air blocking means (20, 21) are of such design that over a predetermined swivel path beginning from its closed position the cold air valve (17) exposes the duct aperture (121) of the cold air duct (12) over only part of its aperture width, while beyond this swivel path it exposes the entire aperture width with a continually increasing aperture cross-section.

2. Unit according to Claim 1,
**characterised in that**
the exposed part of the aperture width of the cold air duct's aperture (121) corresponds approximately to the aperture width of the duct aperture (111) of the warm air duct (11).

3. Unit according to Claims 1 or 2,
**characterised in that**
the air blocking means comprise two diametral, curved baffles (20, 21) arranged at the duct aperture (121) of the cold air duct (12), extending in each case outwards from two diametral end-stops (19) which establish the closed position of the cold air valve (17), concentrically with respect to the swivel axis (171) of the cold air valve (17) with a small radial clearance relative to the long edges (172) of the cold air valve (17) running parallel to the swivel axis (171), which cover part of the swivel path of the cold air valve (17), and the length parallel to the swivel axis (171) of the cold air valve (17) over which one baffle (20) extends corresponds approximately to the aperture width of the cold air duct's aperture (121) while in contrast, the other baffle (21) is smaller by approximately the aperture width of the warm air duct's aperture (111).

4. Unit according to Claim 3,
**characterised in that**
the part of the swivel path of the cold air valve (17) covered by the curved baffles (20, 21 is approximately half the maximum swivel path of the cold air valve (17) delimited on one side by the end-stops (19) and on the other side by an end position of the cold air valve (17) in which its flap surfaces are directed parallel to the normal to the duct aperture (121) of the cold air duct (12).

5. Unit according to Claims 3 or 4,
**characterised in that**
in the fitted position, the duct apertures (111, 121) of the warm air duct (11) and the cold air duct (12) are located at the bottom of the mixing chamber (13) with the planes of their duct apertures inclined relative to one another, and the longer baffle (20) is formed along the upper edge of the duct aperture (121) while the shorter baffle (21) is formed along the lower edge of the duct aperture (121) of the cold air duct (12.

6. Unit according to Claim 5,
**characterised in that**
the duct aperture (121) of the cold air duct (12) extends over the whole width of the mixing chamber (13) and the duct aperture (111) of the warm air duct (11) extends only over one-third of the width of the mixing chamber, such that preferably the two outer delimiting edges (111b, 121b) of the two duct apertures (111, 121) be in a common plane, and the lower baffle (21) ends level with the inner delimiting edge (111a) of the duct aperture (111) of the warm air duct (11).

7. Unit according to Claims 5 or 6,
**characterised in that**
the upper baffle (20) projects into the mixing chamber (13) and the lower baffle (21) projects into the cold air duct (12).

8. Unit according to any of Claims 1 to 7,
**characterised in that**
the baffles (20, 21) are formed as one piece with the walk of the mixing chamber (13) and the cold air duct (12) respectively.

## Revendications

1. Installation de chauffage ou de climatisation pour des habitacles de véhicules, comportant un canal (11) de circulation d'air chaud qui véhicule un air chaud, et un canal (12) de circulation d'air froid qui véhicule un air froid, ainsi qu'une chambre de mélange (13) raccordée à un canal d'évacuation d'air (14) et dans laquelle le canal (11) de circulation d'air chaud et le canal (12) de circulation de l'air froid se terminent par des embouchures séparées (111, 121), un volet pivotant (16) de guidage de l'air chaud, qui commande la section transversale d'embouchure du canal (11) de circulation d'air chaud, et un volet pivotant de guidage de l'air froid, qui commande la section transversale d'embouchure du canal (12) de circulation d'air froid, et des moyens (20, 21) de blocage de l'air, qui sont disposés au niveau de l'embouchure (121) du canal (12) de circulation d'air froid et coopèrent avec le volet (17) de guidage de l'air froid, caractérisée en ce que les moyens (20, 21) de blocage de l'air sont agencés de sorte que le volet (17) de guidage de l'air froid libère l'embouchure (121) du canal (12) de circulation d'air froid, sur un trajet de pivotement prédéterminé à partir de sa position fermée, uniquement sur une partie de la largeur de l'embouchure, et, au-delà de ce trajet de pivotement, sur l'ensemble de la largeur de l'embouchure respectivement avec une section transversale d'ouverture qui augmente continûment.

2. Installation selon la revendication 1, caractérisée en ce que la partie libérée de la largeur de l'embouchure (121) du canal de circulation d'air froid correspond approximativement à la largeur de l'embouchure (111) du canal (11) de circulation d'air chaud.

3. Installation selon la revendication 1 ou 2, caractérisée en ce que les moyens de blocage de l'air comportent deux surfaces de recouvrement de forme arquée (20, 21), qui sont disposés diamétralement au niveau de l'embouchure (121) du canal de circulation d'air froid (12) et qui s'étendent respectivement à partir de deux butées diamétrales (19), qui fixent la position fermée du volet (17) de guidage de l'air froid, concentriquement par rapport à l'axe de pivotement (161) du volet (17) de guidage de l'air froid avec un faible jeu radial par rapport aux bords longitudinaux (172), qui sont parallèles à l'axe de pivotement (171) du volet (17) de guidage de l'air froid et recouvrent une partie du trajet de pivotement du volet (17) de guidage de l'air froid, et que la longueur, comptée parallèlement à l'axe de pivotement (171) du volet (17) de guidage de l'air froid, d'une surface de recouvrement (20) correspond approximativement à la largeur de l'embouchure (121) du canal de circulation d'air froid et que la longueur, comptée parallèlement à l'axe de pivotement (171) du volet (17) de guidage de l'air froid, de l'autre surface de recouvrement (21) est inférieure à la largeur de l'embouchure (121) du canal de circulation d'air froid, et ce approximativement de la largeur de l'embouchure (111) du canal de circulation d'air chaud.

4. Installation selon la revendication 3, caractérisée en ce que la partie, recouverte par les surfaces de recouvrement de forme arquée (20, 21), du trajet de pivotement du volet (17) de guidage de l'air froid est égale approximativement à la moitié du trajet maximal de pivotement du volet (17) de guidage de l'air chaud, qui est fixé d'une part par les butées (19) et d'autre part par la position d'extrémité du volet (17) de guidage de l'air froid, dans laquelle les surfaces des volets sont orientées parallèlement à la normale à l'embouchure (121) du canal (12) de circulation d'air froid.

5. Installation selon la revendication 3 ou 4, caractérisée en ce que dans la position de montage, les embouchures (111, 121) du canal (11) de circulation d'air chaud et du canal (12) de circulation d'air froid sont situées dans la partie inférieure de la chambre de mélange (13), les plans des embouchures étant inclinés l'un par rapport à l'autre et que la surface la plus longue de recouvrement (20) se raccorde au bord supérieur de l'embouchure (121) et la surface de recouvrement la plus courte (21) se raccorde au bord inférieur de l'embouchure (121) du canal (12) de circulation d'air froid.

6. Installation selon la revendication 5, caractérisée en ce que l'embouchure (121) du canal (12) de circulation d'air froid s'étend sur toute la largeur de la chambre de mélange (13) et l'embouchure (121) du canal (11) de circulation d'air chaud s'étend seulement sur un tiers de la largeur de la chambre de mélange, les deux bords extérieurs limites (111b, 121b) des deux embouchures (111, 121) des canaux étant situés de préférence dans un plan, et que la surface de recouvrement inférieure (21) se termine au niveau du bord intérieur limite (111a) de l'embouchure (111) du canal (11) de circulation d'air chaud.

7. Installation selon la revendication 5 ou 6, caractérisée en ce que la surface supérieure de recouvrement (20) pénètre dans la chambre de mélange (13) et la surface inférieure de recouvrement (21) pénètre dans le canal (12) de circulation d'air froid.

8. Installation selon l'une des revendications 1-7, caractérisée en ce que les surfaces de recouvrement (20, 21) sont formées d'un seul tenant sur les parois de la chambre de mélange (13) et du canal (12) de circulation d'air froid.
